Europäisches Patentamt

European Patent Office

Office européen des brevets

(19)

(11) EP 0 893 761 B1

(12) **FASCICULE DE BREVET EUROPEEN**

(45) Date de publication et mention
de la délivrance du brevet:
**07.04.2004 Bulletin 2004/15**

(51) Int Cl.⁷: **G06F 9/46**

(21) Numéro de dépôt: **98401854.9**

(22) Date de dépôt: **21.07.1998**

(54) **Dispositif et procédé de régulation dynamique de l'attribution des ressources sur un système informatique**

Vorrichtung und Verfahren zur dynamischen Regelung der Betriebsmittelzuweisung in einem Computersystem

Device and method for dynamic regulation of the resource allocation in a computer system

(84) Etats contractants désignés:
**DE FR GB IT**

(30) Priorité: **23.07.1997 FR 9709369**

(43) Date de publication de la demande:
**27.01.1999 Bulletin 1999/04**

(73) Titulaire: **BULL S.A.**
**78430 Louveciennes (FR)**

(72) Inventeurs:
• **Durand, Daniel Lucien**
**78180 Montigny le Bretonneux (FR)**

• **Urbain, François**
**75002 Paris (FR)**
• **Sitbon, Gérard**
**94400 Vitry (FR)**

(74) Mandataire: **Denis, Hervé et al**
**BULL SA**
**Département de la Propriété Intellectuelle**
**PC: P4/079**
**rue Jean Jaurès - BP 68**
**78340 Les Clayes-sous-Bois (FR)**

(56) Documents cités:
**EP-A- 0 366 344        EP-A- 0 753 812**
**WO-A-95/08807**

EP 0 893 761 B1

# Description

La présente invention concerne un dispositif et un procédé de régulation dynamique de l'attribution des ressources sur un système informatique.

Elle s'applique au domaine de l'exploitation informatique en environnement industriel et notamment aux systèmes informatiques de type "ouvert" fonctionnant sous des logiciels de type "UNIX". Les serveurs qui fonctionnent sous ce type de logiciels sont des serveurs dits "ouverts" et sont particulièrement prisés de nos jours.

L'inconvénient de ces serveurs est d'avoir été développés pour des applications universitaires dont les préoccupations n'étaient pas identiques à celles des préoccupations industrielles. Ainsi, sous un système d'exploitation "UNIX", les travaux, ou plus exactement chacun des processus composant des travaux se voient attribuer une priorité initiale, soit par le système, soit par l'utilisateur qui soumet ces travaux. Pour faire considérer un travail comme plus prioritaire par le système, il faut donc que l'utilisateur lui attribue explicitement une priorité initiale, ou vienne modifier manuellement sa priorité par une commande d'administration. Il n'y a donc aucune régulation ni inter-corrélation entre les niveaux de priorité que l'on attribue à tel ou tel travail.

De même, il n'y a pas de corrélation automatique entre l'état d'un système en terme de charge de travail et la gestion des priorités des travaux. Ainsi, lorsqu'il n'y a pas de régulation, tous les processus ont les mêmes droits et la loi des nombres prévaut. Si M1, M2 et M3 sont trois groupes de processus non critiques, qui sont plus nombreux et plus actifs que les processus systèmes S1, S2 et S3 et les processus "par lot" critiques (BATCH) B1, B2 et B3, ils prendront la part la plus importante des ressources. Dans un système "UNIX" classique, les processus peuvent démarrer sans aucune limitation, même sur les systèmes hautement chargés, sans aucune attention au montant de ressources, qui est couramment utilisé par les processus exécutés et sans aucune attention au montant de ressources que nécessitera le nouveau processus. Ceci conduit au mauvais comportement suivant : un paquet de processus est exécuté, les processus critiques aussi bien que les processus non critiques et les processus critiques, qui devraient être achevés à un temps souhaité par l'utilisateur disposent de trop peu de ressources pour être achevés au temps souhaité. Dans un même temps, des processus non critiques utilisent trop de ressources.

Le Document EP - A - 0 753 812 décrit un procédé de régulation de l'attribution de resources sur un système informatique dans lequel des moyens de désignation de travaux attribuent des priorités ainsi que des poids aux différents travaux. Lesdits moyens divisent les travaux en groupes sur la base de leur poids de façon telle que le poids total et donc la complexité de chaque groupe est adapté à la capacité du système à gérer toutes les tâches à cet instant.

C'est pourquoi le premier but de l'invention est de proposer un procédé de régulation dynamique des processus et des travaux, un travail étant un enchaînement série ou parallèle de processus, qui permet de palier ces inconvénients.

Ce but est atteint par le fait que le procédé de régulation dynamique des processus sur un système informatique ouvert de type "UNIX" consiste :

- à classer les travaux en dimension ;

- à faire attribuer par l'utilisateur un poids relatif à chacune des dimensions ;

- à moduler les priorités d'exécution des travaux de chaque dimension en fonction des poids relatifs des dimensions, lorsque le système est très chargé.

Selon une autre particularité, lorsque le système utilise les ressources matérielles au-delà d'un seuil important, le procédé va modifier dynamiquement la priorité associée aux travaux en cours en fonction des dimensions auxquels ils appartiennent.

Selon une autre particularité, lorsque la charge d'occupation matérielle du système revient en dessous d'un certain seuil, le procédé rétablit les priorités initiales des travaux.

Un autre but de l'invention est de proposer un dispositif de régulation dynamique des travaux.

Selon ce but, le dispositif de régulation dynamique des travaux exécutés sous un système d'exploitation "UNIX" est caractérisé en ce qu'il comporte :

- des moyens de classer des travaux en dimension ;
- des moyens d'attribuer un poids relatif à chacune des dimensions ;
- des moyens de moduler les priorités d'exécution des travaux de chaque dimension en fonction des poids relatifs des dimensions lorsque le système est très chargé.

Selon une autre particularité, le dispositif comporte des moyens de consulter l'état du système à intervalles de temps réguliers et des moyens d'associer des dimensions à des travaux des utilisateurs et des moyens de donner un poids plus ou moins fort à chacune de ces dimensions.

Selon une autre particularité, le système comporte des moyens de modifier dynamiquement la priorité associée aux travaux en cours en fonction des dimensions auxquels ils appartiennent.

Selon une autre particularité, le dispositif comporte des moyens de constater que la charge du système revient en dessous d'un certain seuil et de rétablir les priorités initiales des travaux.

D'autres particularités et avantages de la présente invention apparaîtront plus clairement à la lecture de la description ci-après, faite en référence aux dessins annexés dans lesquels :

- la figure 1 représente une vue schématique du système informatique et des moyens logiciels associés au système informatique pour permettre la mise en oeuvre du procédé de l'invention ;
- la figure 2A représente une vue de la barre du menu de la fenêtre affichée à l'écran, lors du lancement du programme de gestion des ressources locales selon l'invention ;
- la figure 2B représente une vue de ce menu principal après sélection d'une des composantes du menu de la fenêtre précédente ;
- la figure 2C représente une vue de ce menu principal après sélection d'une autre composante du menu ;
- la figure 2Ca représente une vue de l'affichage effectué lors de la sélection dans la composante de "ressources" de la fonction "affichage" ;
- la figure 2Cb représente une vue de l'écran après avoir sélectionné dans la composante "ressources" la fonction "historique" ;
- la figure 2D représente une vue de l'affichage précédent après la sélection dans la composante "dimensions" d'une fonction "modification" qui permet de faire apparaître un sous-menu avec le nom de toutes les dimensions définies sur le système ;
- la figure 2E représente l'affichage réalisé après cette sélection ;
- la figure 2F représente l'affichage réalisé après la sélection de la fonction "ressources" dans le menu "dimensions" ;
- la figure 2G représente l'affichage réalisé après la sélection de la fonction "processus" dans le menu "dimensions" ;
- la figure 2H représente l'affichage réalisé après la sélection de la fonction "gestion globale" (GLOBAL MANAGEMENT) dans la composante "dimensions".

Dans tout ce qui suit, le terme "processus" ou "tâche" désignera toute exécution d'un programme (et par conséquent, en particulier, son environnement dans le système) à un instant donné, le programme constituant en lui-même, un objet inerte, rangé sur un disque sous la forme d'un fichier ordinaire exécutable. Il est connu, dans les systèmes "UNIX", l'existence de deux types de processus :

- les processus systèmes qui ne sont attachés à aucun terminal, qui sont créés au lancement du système ou à des dates fixées par l'administrateur du système et qui ne sont interrompus qu'à l'arrêt du système. Citons le "SWAPPER", un certain nombre de processus dits "démons" comme par exemple, le processus assurant le bon usage de l'imprimante en "SPOULE" ou le processus "CRON" qui permet de lancer des tâches à une date donnée.

- les processus lancés par un utilisateur particulier depuis un terminal donné à une date donnée. En particulier, le fait de se loger sur un terminal sous une identification donnée, provoque le lancement d'un processus correspondant à l'exécution d'un fichier déterminé et à l'avance, pour chaque utilisateur. Ce type de processus correspond presque toujours à l'exécution d'un interprète d'un langage de commande (BOURNE shell ou C-shell). Pour information, nous rappellerons également que l'utilisation de services standards par un usager est réalisée sur une machine distante par l'intermédiaire de commandes, qui pour fonctionner sur la machine distante, nécessitent l'existence de processus particuliers appelés "démons".

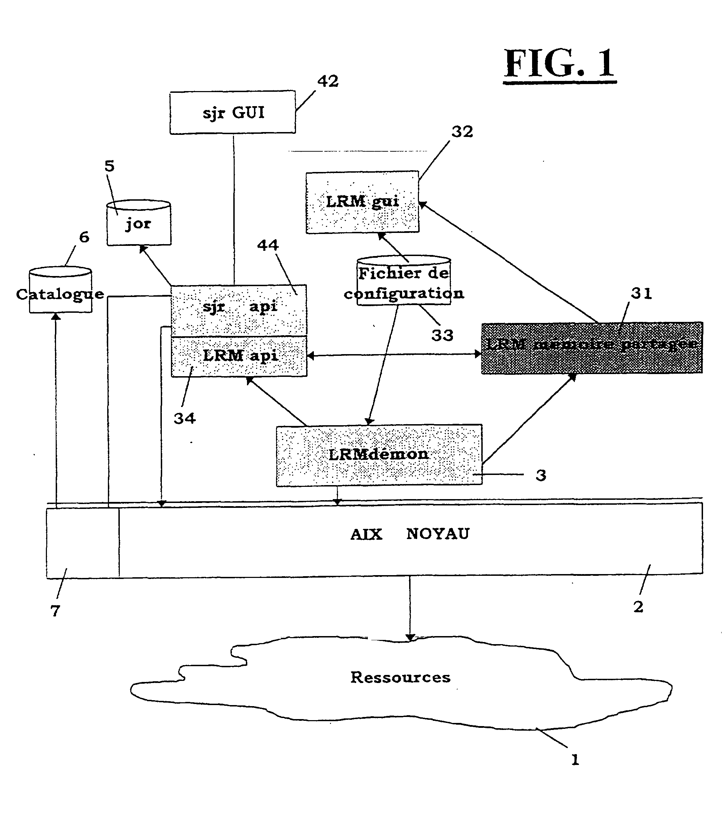

La structure du système "UNIX" représenté à la figure 1 est constitué des ressources matérielles d'un système informatique 1, lequel communique avec un noyau "UNIX" (KERNEL) 2 assurant la gestion de la mémoire et des entrées-sorties de bas niveau et d'enchaînement des différentes tâches (job). Autour de ce noyau, sont utilisés un ou plusieurs "interpreteurs" de langage de commande "shell", un système de messageries et des programmes utilitaires dont évidemment un compilateur de langage C.

Autour de ces éléments classiques dans les systèmes "UNIX", ont été développés, pour les besoins des applications multitâches en environnement ouvert, deux modules de programme, l'un (SJR Service Job Reporting) assurant les rapports d'exécution des tâches lancées par un utilisateur, l'autre (LRM) permettant de visualiser le bon déroulement ou l'arrivée d'incidents et ainsi, de détecter les causes. Ce premier module sera appelé service de compte-rendu de tâches "SJR" (Service Job reporting) et l'autre se nommera "LRM" (Local Ressource Management) module de gestion locale des ressources.

A cela, il a été ajouté pour les besoins de l'invention, un démon (daemon) 3 de management local des ressources qui communique d'une part, avec le noyau 2 et d'autre part, avec une interface de programme d'application 34. Ce démon (daemon) 3 communique également avec un fichier 33 de configuration LRM 33, mémorisé dans le disque dur et avec une interface graphique utilisateur (LRM gui) associée 32 (Graphic Uper Interface). L'interface d'application de programme d'application 34 communique d'une part, avec le démon 3 et d'autre part, avec une mémoire partagée 31. Cette mémoire partagée est également en communication avec l'interface graphique utilisateur 32 et le démon 3. Pour les besoins de la préallocation, le système incorpore une interface 44 de programme d'application "SJR" effectuant le compte-rendu d'exécution de tâches (Service Job Reporting). Cette application 44 communique avec un catalogue "jor" mémorisant dans un fichier distinct 5 du disque dur le compte-rendu des tâches. Cette interface 44 de programme d'application communique, sous réserve qu'il soit activé et que les fichiers de compte-rendu de travaux soient mémorisés, avec le démon 3 de gestion locale des ressources pour permettre la préallocation de ressources et la régulation dynamique. L'interface 44 comporte les lignes de codes nécessaires pour permettre l'exécution des commandes disponibles pour l'utilisateur grâce à cette interface. Les commandes disponibles par cette interface 44 sont les suivantes :

- une commande "SJR" qui permet d'émettre une commande au gestionnaire de ressources et de générer l'exécution d'un fichier de compte-rendu. Cette commande comporte plusieurs options qui permettent de déterminer le nombre de pages à mémoire virtuelle, la quantité d'espace des fichiers temporaires, les dimensions définies par les utilisateurs, la consommation de temps attendu par le CPU, le temps maximum écoulé, le temps maximum CPU, l'espace maximum pour les fichiers temporaires, le nombre maximum de pages à mémoire virtuelle. La description de cette commande, avec la signification de ces différents paramètres, est faite ci-après.

- une commande "SJRjobstart" (int jobid ; int qflag ; struct SJR_resources *SJR_resources ;), dans laquelle le paramètre jobid est l'identifieur de tâche, SJR_resources est la structure décrivant les ressources nécessitées pour la tâche. Cela peut être 0 si la tâche n'a pas besoin de préallocation de ressources. Le paramètre "qflag", lorsqu'il n'est pas nul, signifie que la tâche attendra la disponibilité des ressources. Cette commande vérifie que la tâche peut démarrer, si elle ne veut pas démarrer, le système attend jusqu'à ce que les ressources soient disponibles, ceci est le cas lorsque "qflag" est nul. Si "qflag" n'est pas nul, cela provoque un retour immédiat. Si la tâche peut démarrer, une valeur 0 est renvoyée sinon lorsque "qflag" est positionné, une valeur -1 est renvoyée. De plus, chaque événement majeur d'une tâche est mémorisé lorsqu'il se produit dans un fichier global "logc" du catalogue "jor". De façon à éviter de définir explicitement les paramètres pour chaque soumission de tâche, l'application "SJR" 44 fournit la faculté de déclaration de ressources dans un script. Ainsi, quand le développeur d'une application a bien défini les nécessités de ressources pour sa tâche, il pourra insérer celle-ci dans le script. La tâche sera soumise par la commande "SJR" avec aucun autre paramètre. La syntaxe de la commande « SJR » pour ces lignes de directive est la suivante :

> #option -p "Nombre de pages de mémoire virtuelle"
> #option -t "Montant d'espace de fichiers temporaires"
> #option -d "Fonction définie par l'utilisateur"

> #option - c "Temps CPU attendu"
> #option - e "Temps maximum écoulé"
> #option - C "Limite de temps CPU consommé"
> #option - P "Nombre maximum de pages mémoire virtuelle"
> #option - T "Espace fichiers temporaires maximum"

En cas de conflit, la valeur spécifiée à la soumission de la commande est utilisée ainsi : s'il y a une ligne à l'intérieur du script telle que
#option - C 200
et si le script est soumis avec la ligne de commande suivante :
SJR-C 300 script,
alors la valeur utilisée pour la limite CPU est 300.

Avec un système ainsi équipé du module de gestion locale de ressources, les processus non critiques devraient altérer le moins possible la poursuite de l'exécution des processus critiques. Chaque sorte de processus a sa propre importance. On devrait lui accorder plus ou moins de ressources en fonction de cette importance et en fonction de la charge du système. Pour cette raison, le module "LRM" permet de classifier les processus en dimension. Une dimension sera un jeu de processus couramment exécutés, qui auront la même importance, du point de vue du gestionnaire de ressources locales. Cinq dimensions sont prévues par défaut : une première dimension "SYSTEME", une deuxième dimension "LOT" (BATCH), une troisième dimension "DIVERS" (MISC), une quatrième dimension base de données (DB) et une cinquième dimension protocole de transfert (TP). Si les processus sont lancés par les utilisateurs normaux directement en arrière-plan, ils appartiennent alors à la dimension "DIVERS". Si les processus sont lancés à travers un script, soumis à l'application de gestion des tâches sans aucune déclaration des dimensions explicites, ils appartiennent alors à la deuxième dimension "LOT" (BATCH). Si les processus n'appartiennent à aucune autre dimension, ils appartiennent alors à la dimension "SYSTEME". Les dimensions "DB" et "TP" sont fournies mais sans aucune définition de processus et pourront être définies par l'utilisateur. A l'exception de la dimension "SYSTEME", il sera possible pour chaque dimension, d'avoir un poids relatif, qui sera mémorisé dans un fichier. Ce poids relatif sera utilisé pour gérer la priorité des processus composant la dimension. La priorité de tous les processus appartenant à une dimension, variera de la même façon. La dimension "SYSTEME" n'a pas de poids relatif et les priorités des processus appartenant à cette dimension ne sont pas modifiées par le gestionnaire de ressources locales (LRM). Les processus, régulés par les dimensions, auront toujours des ressources accordées en fonction de leur poids relatif, même si le système est très chargé. Au moment du lancement du gestionnaire de ressources locales, ou lorsqu'une dimension est créée, sans préciser de poids relatif, cette dimension prend un poids de - 1 par défaut, ce qui veut dire qu'elle existera, mais elle ne sera pas régulée. Une dimension peut également être activée ou désactivée. Si elle est désactivée, les tâches soumises lui appartenant ne seront pas démarrées, mais les tâches, qui sont en cours d'exécution dans cette dimension, continueront à être exécutées.

Lorsqu'un processus résulte d'une commande d'exécution d'une tâche "SJR", il appartient à la dimension spécifiée, si une dimension a été spécifiée dans la commande "SJR". Lorsque le processus a un ancêtre dont le nom de commande et l'utilisateur sont associés à une dimension, le processus appartient à cette dimension. Pendant le temps d'exécution d'un processus, le poids relatif sera utilisé pour gérer et modifier la priorité des processus composant la dimension. La priorité de tous les processus dans une dimension variera de la même façon. Les processus de la dimension "DIVERS" (MISC) auront un "NICE" à sa valeur maximum, c'est-à-dire la priorité la plus basse et quand le système est chargé. C'est-à-dire que la priorité est plus haute qu'un seuil défini par l'administrateur dans les fichiers de configuration. Dans un système "UNIX", le "NICE" est un indicateur associé à un processus dont la valeur est inversement proportionnelle à la priorité. Le mécanisme de régulation de l'invention est optionnel et il y a deux façons d'enregistrer les applications d'utilisateur dans les dimensions. L'identifieur de dimension peut être fourni explicitement par la soumission des tâches d'application à travers le programme des tâches. Le processus d'une application peut être associé à une dimension en spécifiant le nom de la commande exécutée par le processus et l'utilisateur, sous le nom duquel le processus est exécuté. Le mécanisme de régulation dynamique de priorité selon l'invention consiste à considérer deux valeurs. Une première valeur "Pdc" représente le pourcentage courant des ressources utilisées par tous les processus appartenant à la dimension. Une deuxième valeur "Pde" représente le pourcentage de ressources qui devraient être utilisées par la dimension. La première valeur "Pdc" est obtenue en balayant périodiquement la table des processus systèmes, en associant les processus à leur dimension et en calculant la somme pour chaque dimension des ressources utilisées par chaque processus de la dimension.

La seconde valeur "Pde" est calculée selon la formule suivante :

$$Pde = \frac{Rd}{\Sigma R_i} * Pns$$

"Rd" est le poids relatif de la dimension. "$R_i$" est le poids relatif de chaque dimension. La somme "$\Sigma R_i$" est la somme de tous les poids relatifs de toutes les dimensions qui ont eu de l'activité durant la tranche de temps considéré. "Pns" est le pourcentage de ressources utilisées par les processus, n'appartenant pas à la dimension "SYSTEME", qui ont un poids relatif et ont consommé des ressources pendant l'intervalle de temps considéré. Si la différence entre "Pdc" et "Pde" est plus grande qu'une valeur de seuil déterminée, la valeur "NICE" du processus, appartenant à la dimension, est modifiée dans une direction ou une autre. Plus la différence est grande, plus la valeur "NICE" est modifiée. La plage de variation de la valeur "NICE" est comprise entre 0 et 40. La valeur "NICE" est fixée à la valeur 26 pour la dimension "SYSTEME". Lorsque la valeur "NICE" augmente, la priorité diminue. Par exemple, dans un système ayant une dimension "MYDIM", celle-ci peut être définie sur le système avec un poids relatif de 2, un poids relatif de 1 ayant été déclaré pour la dimension "LOT" (BATCH). Quand le système est très chargé, les priorités des processus, appartenant à la dimension "MYDIM", seront modifiées de la façon suivante :

Si les processus de la dimension "MYDIM" et "LOT" utilisent 90% de l'unité processeur (CPU), la priorité des processus de dimension "MYDIM" sera modifiée dans un sens ou dans un autre, de telle sorte que le pourcentage de CPU utilisé par la dimension "MYDIM" soit plus proche de 60%.

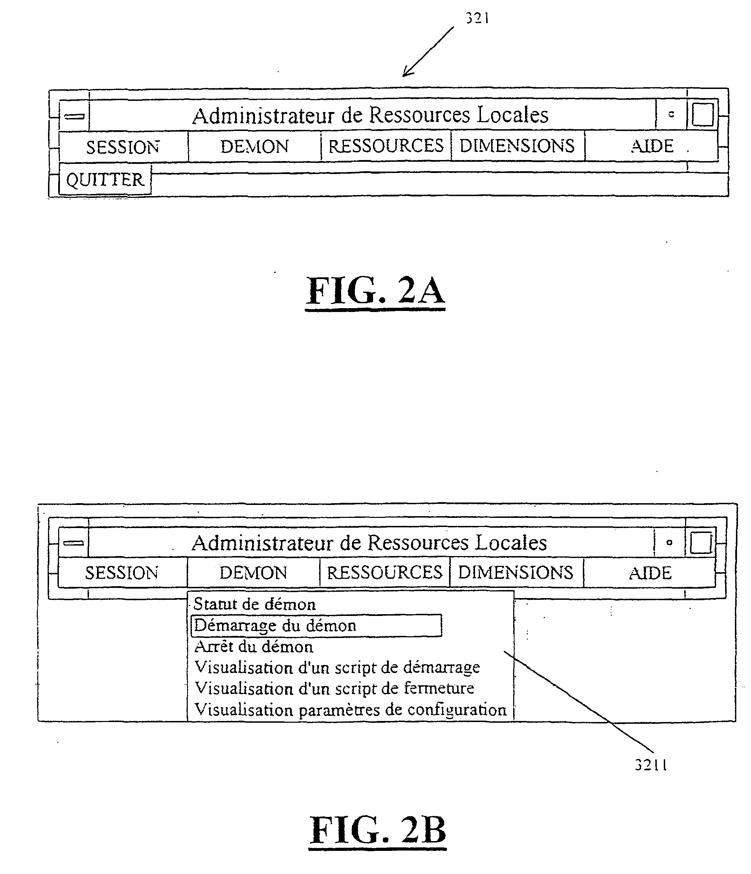

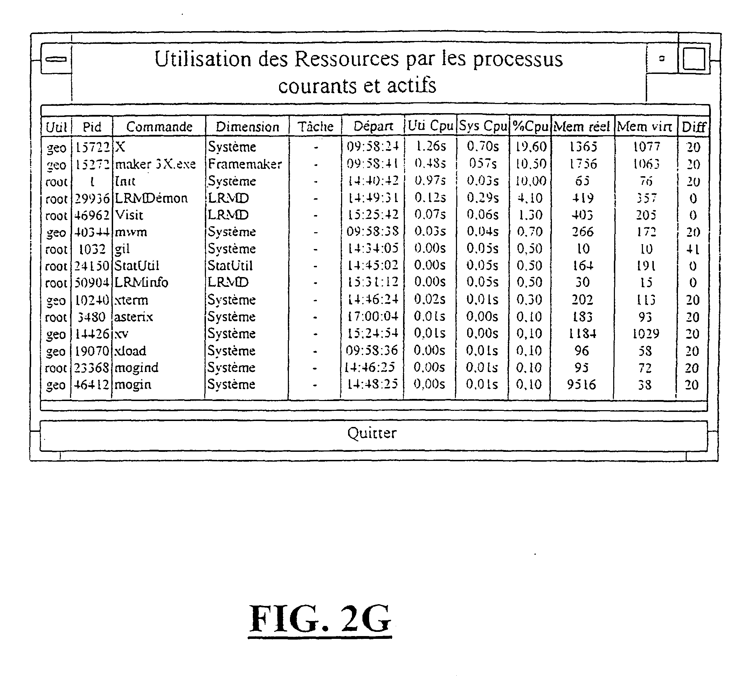

Par ailleurs, l'interface de programme d'application "LRM" 34 est associée avec une interface graphique utilisateur "LRM gui" 32. Cette interface 32 permet à l'utilisateur, par action sur une souris ou un élément autre qu'une souris, de déclencher des événements extérieurs traités par une interface graphique préprogrammée, susceptible de reconnaître ces événements tels que par exemple, l'appui, le relâchement d'un bouton, la traîne et des événements logiques tels que l'entrée du pointeur souris dans une fenêtre. Cette interface 32 permet également à l'utilisateur, toujours par action sur une souris ou un élément autre qu'une souris, de déclencher des traitements dans l'interface graphique permettant, à partir du menu général représenté à la figure 2A, de faire apparaître une fenêtre 321 comportant les différentes composantes d'un menu, qui est constituée par les termes session, démon, ressources, dimensions, aide. Ce menu permet de sélectionner une composante, à l'aide de la souris. Après avoir cliqué sur le bouton de la souris, la sélection de la composante fait apparaître après traitement par le programme d'interface graphique un sous-menu tel que celui de la figure 2B pour la composante "démon". Ce sous-menu 3211 permet, à l'aide de la souris, de faire mettre en surbrillance ou en surépaisseur une des composantes de ce sous-menu qui comporte une fonction permettant l'affichage du statut du démon, le démarrage d'un démon, l'arrêt d'un démon, la visualisation d'un script de démarrage, la visualisation d'un script de fermeture et la visualisation des paramètres de configuration.

La sélection de la composante "ressources" par la souris permet, après traitement par le programme d'interface graphique, l'affichage d'un sous-menu 3212 comme représenté à la figure 2C. Ce sous-menu comporte la possibilité de sélectionner une des fonctions suivantes : affichage, historique, seuils. La sélection de la fonction "affichage" permet, comme représenté à la figure 2Ca, à l'interface "LRM gui" par extraction des informations des fichiers "jor", de visualiser une fenêtre comportant une pluralité de barres d'histogramme représentant chacune respectivement le pourcentage d'utilisation du CPU, le pourcentage d'utilisation de la mémoire réelle, de la mémoire virtuelle et des espaces fichiers temporaires. La sélection de la fonction "historique" permet comme représenté à la figure 2Cb, à l'interface "LRM gui" par extraction des informations des fichiers "jor" la représentation de l'historique récent de la consommation des ressources sur le système en tranche de 10 secondes, ceci pour chacune des composantes du système, à savoir CPU, mémoire réelle, mémoire virtuelle, espace fichiers temporaires.

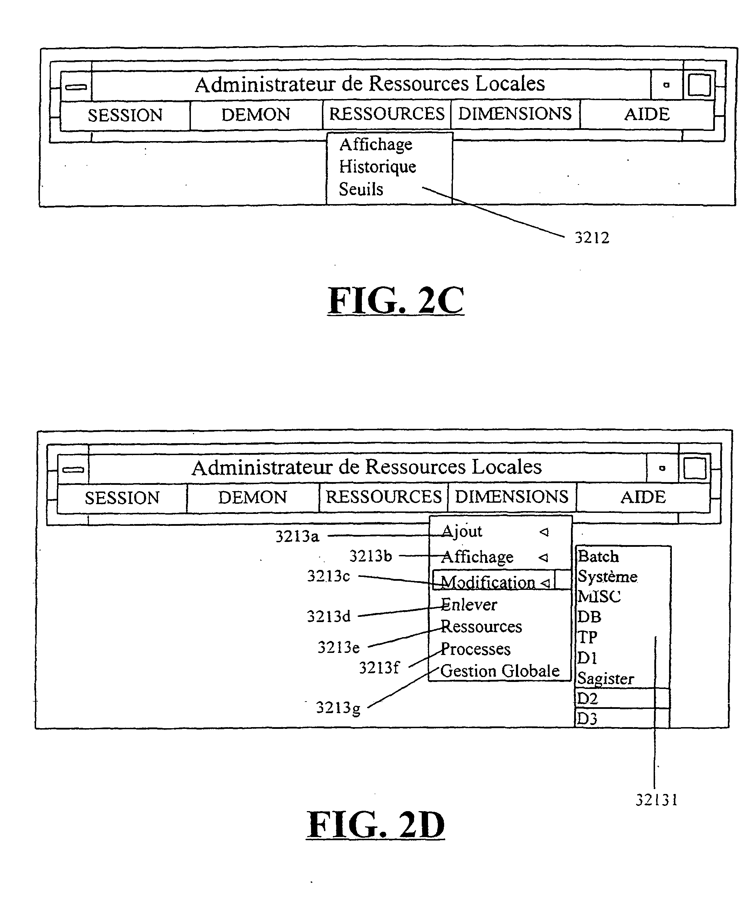

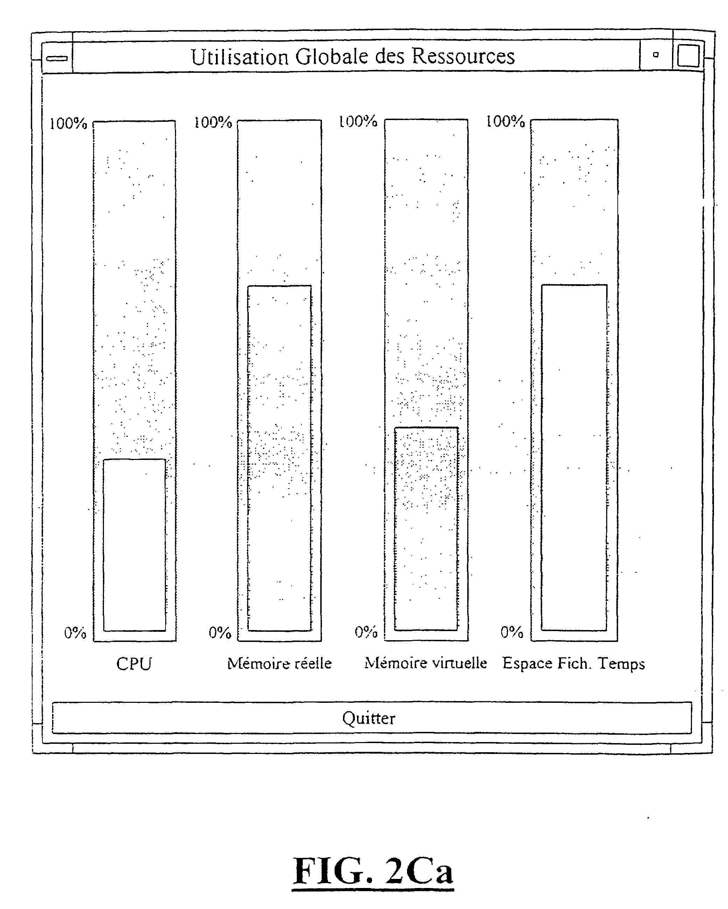

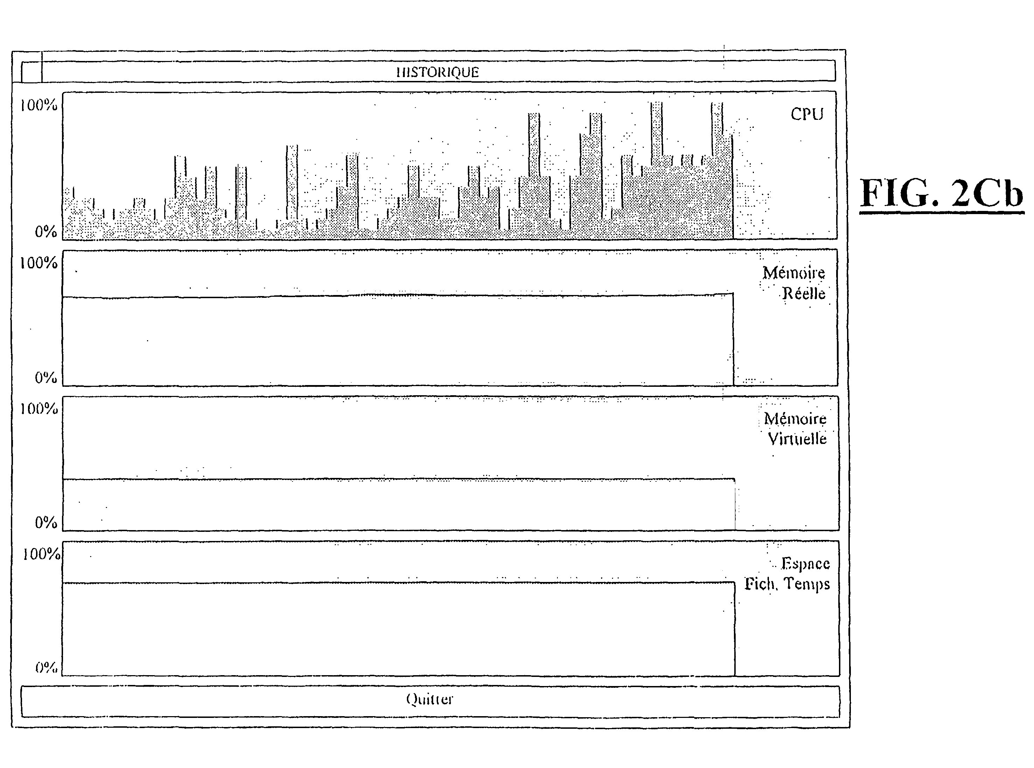

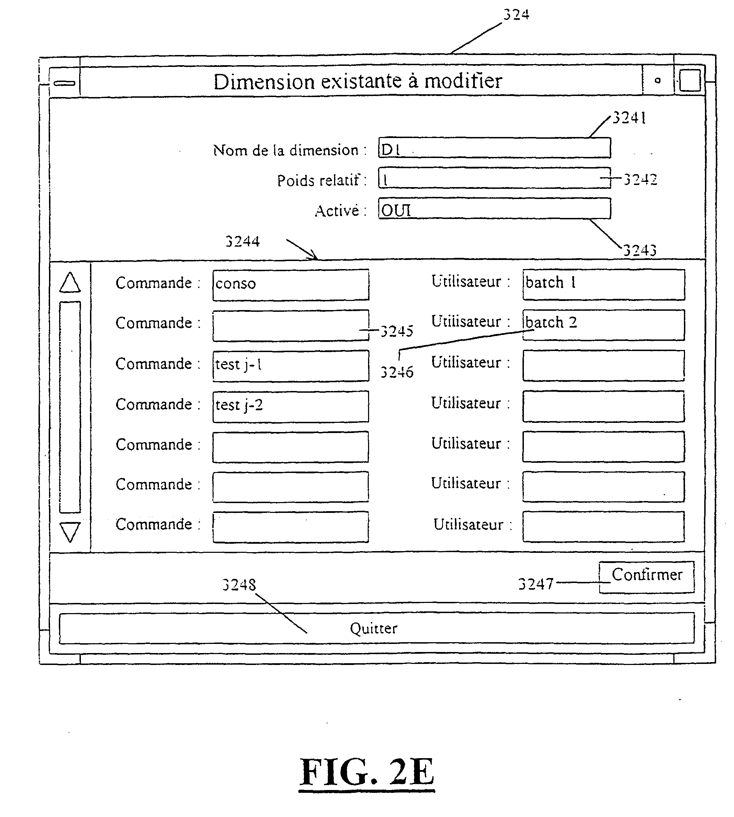

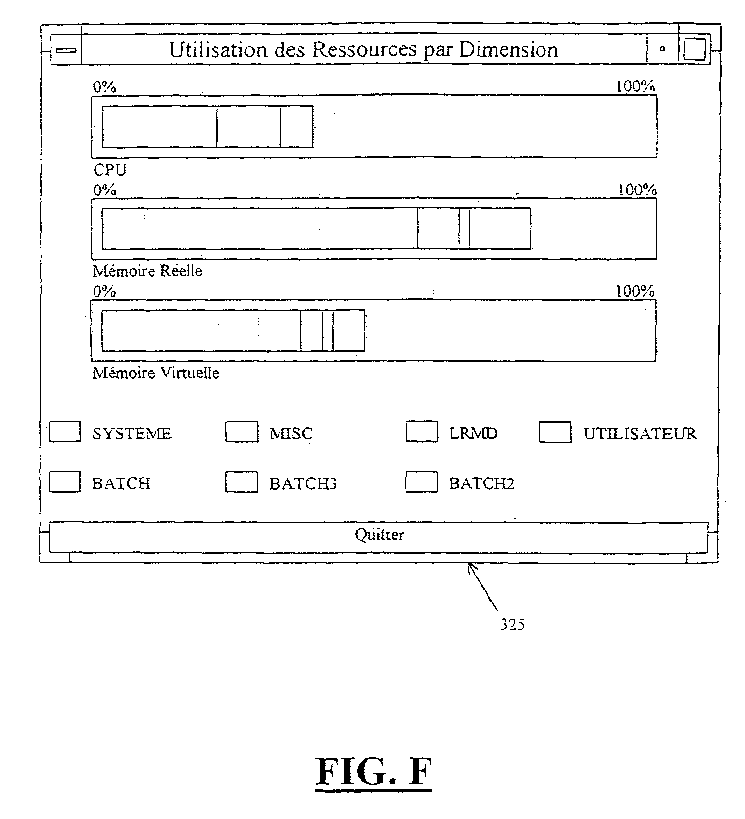

La figure 2D représente l'affichage effectué, après avoir sélectionné dans la barre principale du menu la composante "dimensions". Cette sélection fait apparaître un sous-menu comportant plusieurs fonctions possibles, une première 3213 a qui permet l'ajout, une deuxième 3213 b qui permet l'affichage, une troisième 3213 c qui permet la modification, une quatrième 3213 d qui permet d'enlever une dimension, une cinquième 3213 e qui permet de connaître les ressources consommées par une dimension, une sixième 3213 f qui permet de connaître les processus et une septième 3213 g qui permet de connaître la gestion globale. Lorsque l'utilisateur sélectionne par exemple, avec sa souris la troisième fonction, en la mettant en surbrillance et valide cette sélection en cliquant sur le bouton de la souris, ceci fait apparaître en surbrillance la fonction "modification". Cette action, après traitement par le programme d'interface graphique, provoque l'apparition d'un deuxième sous-menu comportant dans une fenêtre 3231, une pluralité de dimensions disponibles sur le système. La sélection, à l'aide de la souris de l'une des dimensions disponibles dans cette fenêtre du deuxième sous-menu permet, après traitement par le programme d'interface graphique, l'affichage de la figure 2E qui comporte un premier pavé 3241 alphanumérique permettant de définir le nom de la dimension, un second pavé 3242 alphanumérique permettant de définir le poids relatif, un troisième pavé 3243 alphanumérique permettant d'activer la fonction de régulation dynamique. Enfin, la fenêtre comporte également une liste déroulante 3244 permettant d'afficher dans deux colonnes séparées, l'une affectée aux commandes, l'autre affectée aux utilisateurs, chacune des commandes et chacun des utilisateurs associés à chaque commande. L'utilisateur peut venir se positionner grâce à la souris dans un des pavés 3245 de la colonne "commandes", ou dans l'un des pavés 3246 de la colonne "utilisateurs", pour entrer par le clavier la commande, à exécuter ainsi que la dimension associée dans la colonne "utilisateurs". Enfin, un bouton 3247 "confirmation" et un bouton 3248 "quitter" permettent de confirmer les informations modifiant la dimension existante, ou de quitter sans avoir effectué de modifications. En cas de relation du bouton "confirmation", les informations sont mémorisées dans les fichiers "jor" et les poids relatifs ainsi entrées ou modifiées, seront utilisées dans le procédé de régulation dynamique.

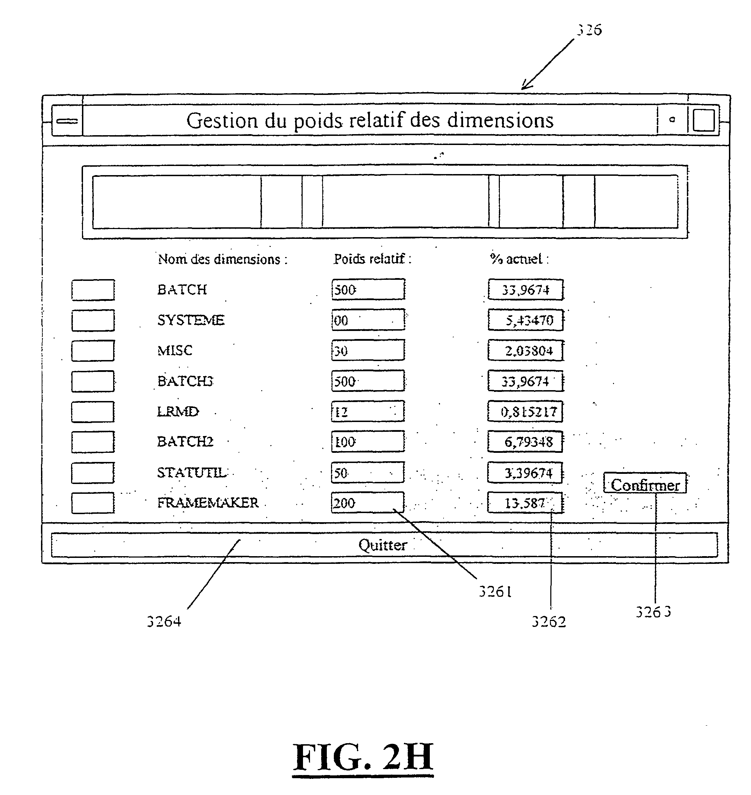

La figure 2F représente l'affichage d'une fenêtre indiquant les utilisations des ressources par dimension, lorsqu'on a sélectionné dans le menu 3213 la fonction "ressources". Cette utilisation représentée sous forme d'histogrammes dont chacun est associé à une des composantes du système à savoir : CPU, mémoire réelle, mémoire virtuelle et ceci pour chacune des dimensions. L a représentation d'un histogramme est obtenue par traitement par le programme d'interface graphique. De même, la sélection de la fonction "processus" permet, après traitement par le programme d'interface graphique, d'afficher dans une fenêtre 2G la liste des processus qui ont consommé le plus de temps d'unité centrale pendant les dix dernières secondes avec leur "NICE". Enfin, la sélection de la dernière fonction "gestion globale" permet d'afficher, dans une fenêtre représentée à la figure 2H, la gestion des poids relatifs pour chaque dimension. Ce qui permet à l'utilisateur d'entrer, dans chaque pavé associé à chaque dimension, une nouvelle valeur de poids relatif et de visualiser, dans le pavé représentant le pourcentage actuel, la modification du pourcentage actuel. Enfin, pour la fonction "modification", un bouton "confirmation" 3263 et un bouton "quitter" 3264 permettent de confirmer les modifications de poids relatif ou de quitter la fonction sans avoir effectué de modifications.

**Revendications**

1. Procédé de régulation dynamique de l'attribution des ressources sur un système informatique ouvert de type "UNIX" consistant:

   - à classer les travaux dans un groupe, appelé "dimension", de processus couramment exécutés qui sont de même importance du point de vue du gestionnaire de ressources locales ;
   - à faire attribuer par l'utilisateur un poids relatif à chacune des dimensions ;
   - à moduler dynamiquement les priorités d'exécution des travaux de chaque dimension en fonction des poids relatifs des dimensions, lorsque le système est très chargé.

2. Procédé de régulation dynamique de l'attribution des ressources sur un système informatique ouvert de type "UNIX" selon la revendication 1, le dit procédé modifiant dynamiquement la priorité associée aux travaux en cours en fonction des dimensions auxquels ils appartiennent, lorsque le système utilise les ressources matérielles au-delà d'un seuil important.

3. Procédé de régulation dynamique de l'attribution des ressources sur un système informatique ouvert de type "UNIX" selon la revendication 1 ou 2, le dit procédé rétablissant les priorités initiales des travaux lorsque la charge d'occupation matérielle du système revient en dessous d'un certain seuil.

4. Dispositif de régulation dynamique de l'attribution des ressources sur un système informatique ouvert de type "UNIX" comportant:

   - des moyens de classer des travaux dans un groupe, appelé "dimension", de processus couramment exécutés qui sont de même importance du point de vue du gestionnaire de ressources locales ;
   - des moyens d'attribuer un poids relatif à chacune des dimensions ;
   - des moyens de moduler les priorités d'exécution des travaux de chaque dimension en fonction des poids relatifs des dimensions lorsque le système est très chargé.

5. Dispositif de régulation dynamique de l'attribution des ressources sur un système informatique ouvert de type "UNIX" selon la revendication 4 comportant des moyens de consulter l'état du système à intervalles de temps réguliers et des moyens d'associer des dimensions à des travaux des utilisateurs et des moyens de donner un poids plus ou moins fort à chacune de ces dimensions.

6. Dispositif de régulation dynamique de l'attribution des ressources sur un système informatique ouvert de type "UNIX" selon la revendication 4 ou 5, le dit système comportant des moyens de modifier dynamiquement la priorité associée aux travaux en cours en fonction des dimensions auxquels ils appartiennent.

7. Dispositif de régulation dynamique de l'attribution des ressources sur un système informatique ouvert de type "UNIX" selon une des revendications 4 ou 6, comportant des moyens de constater que la charge du système revient en dessous d'un certain seuil et de rétablir les priorités initiales des travaux.

**Patentansprüche**

1. Verfahren zum dynamischen Regulieren der Zuweisung von Betriebsmitteln an ein offenes Datenverarbeitungssystem des Typs "UNIX", das darin besteht:

   - die Arbeiten in einer "Dimension" genannten Gruppe momentan ausgeführter Prozesse, die für die Steuerung lokaler Betriebsmittel die gleiche Wichtigkeit besitzen, zu klassifizieren;

   - durch den Anwender jeder der Dimensionen ein relatives Gewicht zuzuweisen;

   - die Prioritäten der Ausführung der Arbeiten jeder Dimension in Abhängigkeit von den relativen Gewichten der Dimensionen dynamisch zu modulieren, wenn das System sehr belastet ist.

2. Verfahren zum dynamischen Regulieren der Zuweisung von Betriebsmitteln an ein offenes Datenverarbeitungssystem des Typs "UNIX" nach Anspruch 1, wobei das Verfahren die den laufenden Arbeiten zugeordnete Priorität in Abhängigkeit von den Dimensionen, zu denen sie gehört, dynamisch modifiziert, wenn das System Hardware-Betriebsmittel jenseits eines hohen Schwellenwertes verwendet.

3. Verfahren zum dynamischen Regulieren der Zuweisung von Betriebsmitteln an ein offenes Datenverarbeitungssystem des Typs "UNIX" nach Anspruch 1 oder 2, wobei das Verfahren die anfänglichen Prioritäten der Arbeiten wiederherstellt, wenn die Hardwarebelegungsbelastung des Systems wieder unter einen bestimmten Schwellenwert sinkt.

4. Vorrichtung zum dynamischen Regulieren der Zuweisung von Betriebsmitteln an ein offenes Datenverarbeitungssystem des Typs "UNIX", mit:

   - Mitteln zum Klassifizieren von Arbeiten in eine "Dimension" genannte Gruppe momentan ausgeführter Prozesse, die für die Steuerung lokaler Betriebsmittel dieselbe Wichtigkeit besitzen;

   - Mitteln, die jeder der Dimensionen ein relatives Gewicht zuweisen;

   - Mitteln, die die Ausführungsprioritäten der Arbeiten jeder Dimension in Abhängigkeit von den relativen Gewichten der Dimensionen modulieren, wenn das System sehr belastet ist.

5. Vorrichtung zum dynamischen Regulieren der Zuweisung von Betriebsmitteln an ein offenes Datenverarbeitungssystem des Typs "UNIX" nach Anspruch 4, die Mittel, die den Zustand des Systems in regelmäßigen Zeitintervallen abfragen, und Mittel, die den Arbeiten der Anwender Dimensionen zuweisen, sowie Mittel, die jeder dieser Dimensionen ein mehr oder weniger hohes Gewicht verleihen, umfasst.

6. Vorrichtung zum dynamischen Regulieren der Zuweisung von Betriebsmitteln an ein offenes Datenverarbeitungssystem des Typs "UNIX" nach Anspruch 4 oder 5, wobei das System Mittel umfasst, die die den momentanen Arbeiten zugeordnete Priorität in Abhängigkeit von den Dimensionen, zu denen sie gehört, dynamisch modifizieren.

7. Vorrichtung zum dynamischen Regulieren der Zuweisung von Betriebsmitteln an ein offenes Datenverarbeitungssystem des Typs "UNIX" nach einem der Ansprüche 4 oder 6, die Mittel umfasst, die feststellen, dass die Last des Systems wieder unter einem bestimmten Schwellenwert gesunken ist, und die anfänglichen Prioritäten der Arbeiten wiederherstellen.

## Claims

1. Method for dynamic regulation of the allocation of resources in a UNIX-type open computer system consisting in:

   - classifying jobs in a group, called "dimension", of commonly executed processes that have the same importance from the point of view of the local resource manager;

   - causing the user to assign relative weight to each of the dimensions;

   - dynamically modulating the execution priorities of the jobs of each dimension as a function of the relative weights of the dimensions when the system is heavily loaded.

2. Method for dynamic regulation of the allocation of resources in a UNIX-type open computer system according to Claim 1, said method dynamically modifying the priority associated with the jobs in progress as a function of the dimensions to which they belong, when the system is using hardware resources in excess of a substantial threshold.

3. Method for dynamic regulation of the allocation of resources in a UNIX type open computer system according to Claim 1 or 2, said method re-establishing the initial priorities of the jobs when the hardware occupancy load of the system falls below a certain threshold.

4. Device for dynamic regulation of the allocation of resources in a UNIX-type open computer system including a local resource manager, comprising:

   - means for classifying jobs in a group, called "dimension", of commonly executed processes that have the same importance from the point of view of the local resource manager;

   - means for assigning a relative weight to each of the dimensions;

   - means for modulating the execution priorities of the jobs of each dimension as a function of the relative weights of the dimensions when the system is heavily loaded.

5. Device for dynamic regulation of the allocation of resources in a UNIX-type open computer system according to Claim 4, comprising means for consulting the state of the system at regular time intervals, and means for associating dimensions to the jobs of the users and means for giving a greater or lesser weight to each of these dimensions.

6. Device for dynamic regulation of the allocation of resources in a UNIX-type open computer system according to Claim 4 or 5, said system comprising means for dynamically modifying the priority associated with the jobs in progress as a function of the dimensions to which they belong.

7. Device for dynamic regulation of the allocation of resources in a UNIX-type open computer system according to one of Claims 4 or 6, comprising means for recording that the system load has fallen below a certain threshold and for re-establishing the initial priorities of the jobs.

# FIG. 1

321

| Administrateur de Ressources Locales | | | | ▫ | ☐ |
|---|---|---|---|---|---|
| SESSION | DEMON | RESSOURCES | DIMENSIONS | AIDE | |
| QUITTER | | | | | |

# FIG. 2A

| Administrateur de Ressources Locales | | | | ▫ | ☐ |
|---|---|---|---|---|---|
| SESSION | DEMON | RESSOURCES | DIMENSIONS | AIDE | |

Statut de démon
Démarrage du démon
Arrêt du démon
Visualisation d'un script de démarrage
Visualisation d'un script de fermeture
Visualisation paramètres de configuration

3211

# FIG. 2B

Administrateur de Ressources Locales

| SESSION | DEMON | RESSOURCES | DIMENSIONS | AIDE |

Affichage
Historique
Seuils

3212

# FIG. 2C

Administrateur de Ressources Locales

| SESSION | DEMON | RESSOURCES | DIMENSIONS | AIDE |

3213a —————— Ajout ◁
3213b —————— Affichage ◁
3213c —————— Modification ◁
3213d —————— Enlever
3213e —————— Ressources
3213f —————— Processes
3213g —————— Gestion Globale

Batch
Système
MISC
DB
TP
D1
Sagister
D2
D3

32131

# FIG. 2D

**FIG. 2Ca**

FIG. 2Cb

EP 0 893 761 B1

324

## Dimension existante à modifier

Nom de la dimension : D1 — 3241

Poids relatif : l — 3242

Activé : OUI — 3243

3244

| | |
|---|---|
| Commande : conso | Utilisateur : batch 1 |
| Commande : — 3245 | Utilisateur : batch 2 |
| Commande : test j-1 3246 | Utilisateur : |
| Commande : test j-2 | Utilisateur : |
| Commande : | Utilisateur : |
| Commande : | Utilisateur : |
| Commande : | Utilisateur : |

3248    3247 — Confirmer

Quitter

# FIG. 2E

Utilisation des Ressources par Dimension

0%                                                                    100%

CPU

0%                                                                    100%

Mémoire Réelle

0%                                                                    100%

Mémoire Virtuelle

☐ SYSTEME        ☐ MISC        ☐ LRMD        ☐ UTILISATEUR

☐ BATCH        ☐ BATCH3        ☐ BATCH2

Quitter

325

# FIG. F

| | | | Utilisation des Ressources par les processus courants et actifs | | | | | | | | | |
|---|---|---|---|---|---|---|---|---|---|---|---|---|
| Util | Pid | Commande | Dimension | Tâche | Départ | Uti Cpu | Sys Cpu | %Cpu | Mem réel | Mem virt | Diff |
| geo | 15722 | X | Système | - | 09:58:24 | 1.26s | 0.70s | 19,60 | 1365 | 1077 | 20 |
| geo | 15272 | maker 5X.exe | Framemaker | - | 09:58:41 | 0.48s | 057s | 10,50 | 1736 | 1063 | 20 |
| root | 1 | Init | Système | - | 14:40:42 | 0.97s | 0.03s | 10,00 | 65 | 76 | 20 |
| root | 29936 | LRMDémon | LRMD | - | 14:49:31 | 0.12s | 0.29s | 4,10 | 419 | 357 | 0 |
| root | 46962 | Visit | LRMD | - | 15:25:42 | 0.07s | 0.06s | 1,30 | 403 | 205 | 0 |
| geo | 40344 | mwm | Système | - | 09:58:38 | 0.03s | 0.04s | 0,70 | 266 | 172 | 20 |
| root | 1032 | gil | Système | - | 14:34:05 | 0.00s | 0.05s | 0,50 | 10 | 10 | 41 |
| root | 24150 | StatUtil | StatUtil | - | 14:45:02 | 0.00s | 0.05s | 0,50 | 164 | 191 | 0 |
| root | 50904 | LRMinfo | LRMD | - | 15:31:12 | 0.00s | 0.05s | 0,50 | 30 | 15 | 0 |
| geo | 10240 | xterm | Système | - | 14:46:24 | 0.02s | 0.01s | 0,30 | 202 | 113 | 20 |
| root | 3480 | asterix | Système | - | 17:00:04 | 0.01s | 0.00s | 0,10 | 183 | 93 | 20 |
| geo | 14426 | xv | Système | - | 15:24:54 | 0.01s | 0.00s | 0,10 | 1184 | 1029 | 20 |
| geo | 19070 | xload | Système | - | 09:58:36 | 0.00s | 0.01s | 0,10 | 96 | 58 | 20 |
| root | 23368 | mogind | Système | - | 14:46:25 | 0.00s | 0.01s | 0,10 | 95 | 72 | 20 |
| geo | 46412 | mogin | Système | - | 14:48:25 | 0,00s | 0.01s | 0,10 | 9516 | 58 | 20 |

Quitter

# FIG. 2G

16

326

## Gestion du poids relatif des dimensions

| Nom des dimensions : | Poids relatif : | % actuel : |
|---|---|---|
| BATCH | 500 | 33,9674 |
| SYSTEME | 00 | 5,43470 |
| MISC | 30 | 2,03804 |
| BATCH3 | 500 | 33,9674 |
| LRMD | 12 | 0,815217 |
| BATCH2 | 100 | 6,79348 |
| STATUTIL | 50 | 3,39674 |
| FRAMEMAKER | 200 | 13,587 |

Confirmer

Quitter

3261

3264

3262

3263

# FIG. 2H